# EUROPÄISCHE PATENTSCHRIFT

(11) **EP 1 272 753 B1**
(45) Veröffentlichungstag und Bekanntmachung des Hinweises auf die Patenterteilung: **28.09.2005**
(21) Anmeldenummer: 01927587.4
(22) Anmeldetag: 23.03.2001
(51) Int. Cl.: F02D 41/14, F02D 21/08, F02D 41/18

(54) **VERFAHREN UND VORRICHTUNG ZUR STEUERUNG EINER BRENNKRAFTMASCHINE**
METHOD AND DEVICE FOR CONTROLLING AN INTERNAL COMBUSTION ENGINE
PROCEDE ET DISPOSITIF DE COMMANDE D'UN MOTEUR A COMBUSTION INTERNE

(30) Priorität: 06.04.2000 DE 10017280
(43) Veröffentlichungstag der Anmeldung: 08.01.2003
(73) Patentinhaber: ROBERT BOSCH GMBH, 70442 Stuttgart (DE)
(72) Erfinder: ENGEL, Gerhard, 70469 Stuttgart (DE); MEIER, Frank, 70806 Kornwestheim (DE); BLEILE, Thomas, 70435 Stuttgart (DE); RUPP, Peter, 71686 Remseck (DE); KRAEMER, Wolfgang, 85051 Ingolstadt (DE)
(86) Internationale Anmeldenummer: PCT/DE2001/001118
(87) Internationale Veröffentlichungsnummer: WO 2001/077509

(56) Entgegenhaltungen:
- EP-A- 0 845 586
- EP-A- 1 024 275
- WO-A-97/35106
- DE-A- 19 830 300

## Beschreibung

### Stand der Technik

Die Erfindung betrifft ein Verfahren und eine Vorrichtung zur Steuerung einer Brennkraftmaschine.

Ein Verfahren und eine Vorrichtung zur Steuerung einer Brennkraftmaschine ist beispielsweise aus der DE 197 56 619 bekannt. Dort wird ein System zum Betreiben einer Brennkraftmaschine insbesondere in einem Kraftfahrzeug beschrieben, bei dem die Luft über eine in einem Ansaugrohr angeordnete Drosselklappe einem Brennraum zugeführt wird, wobei der Mengenstrom über die Drosselklappe ermittelt wird. Dabei ist in einer Abgasrückführleitung ein Ventil angeordnet, wobei der Mengenstrom über das Ventil in der Abgasrückführleitung ebenfalls ermittelt wird. Ausgehend von den beiden Luftmengenströmen wird der Luftmengenstrom in den Brennraum bestimmt. Problematisch bei dieser Einrichtung ist es, dass verschiedene Größen, die zur Berechnung benötigt werden, nur schwer mittels Sensoren erfasst werden können. Nachteilig ist daher, dass eine große Anzahl von Sensoren zur Erfassung der verschiedenen Größen erforderlich sind.

Ferner ist aus der DE 198 30 300 A ein Verfahren zum Betreiben einer Brennkraftmaschine bekannt, bei dem sich der Brenngasanteil aus der bei einem Hub ansaugbaren Teilchenzahl und der relativen Füllung, die der Frischgasmenge entspricht, berechnet.
Zur Berechnung von diesen Werten werden der Druck im Ansaugrohr, die Temperatur im Ansaugrohr, die Drehzahl der Brennkraftmaschine, die über die Drosselklappe pro Zeiteinheit zuströmende Teilchenzahl und die relative Kraftstoffmasse verwendet.

### Vorteile der Erfindung

Mit der erfindungsgemäßen Vorgehensweise, gemäß Anspruch 1 bzw. 9, ist es möglich, die Sauerstoffmenge, die in die Brennkraftmaschine strömt, zu bestimmen. Dabei sind lediglich einige wenige Meßgrößen erforderlich, die mittels einfacher, billiger Sensoren leicht erfaßbar sind. Desweiteren werden Größen verwendet, die bei der Steuerung der Brennkraftmaschine intern im Steuergerät vorliegen.

Als Meßgröße werden wenigstens eine Drehzahlgröße (N), die die Drehzahl der Brennkraftmaschine charakterisiert, eine Ladelufttemperatur (T2), die die Temperatur in dem Ansaugrohr charakterisiert, und/oder ein Ladedruck (P2), der den Druck in dem Ansaugrohr charakterisiert, verwendet.

Vorteilhafte und zweckmäßige Ausgestaltungen und Weiterbildungen der Erfindung sind in den Unteransprüchen gekennzeichnet.

### Zeichnung

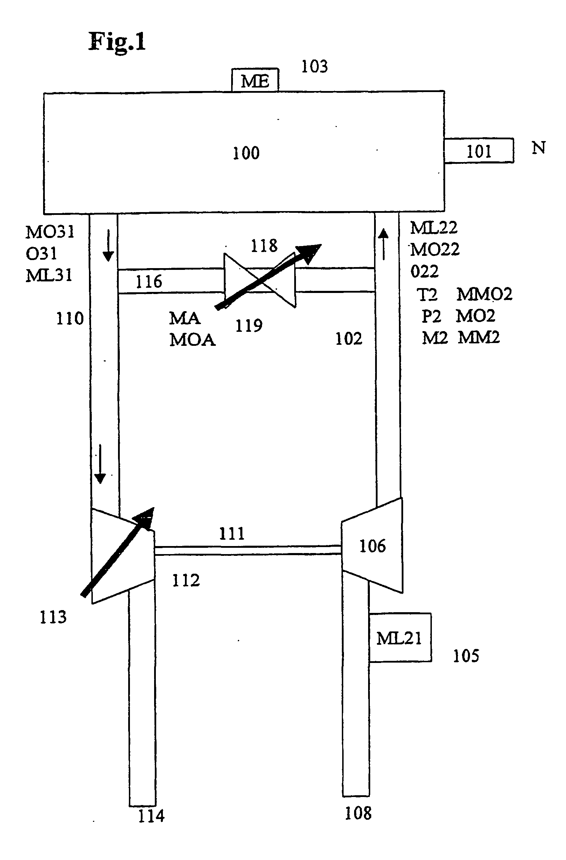

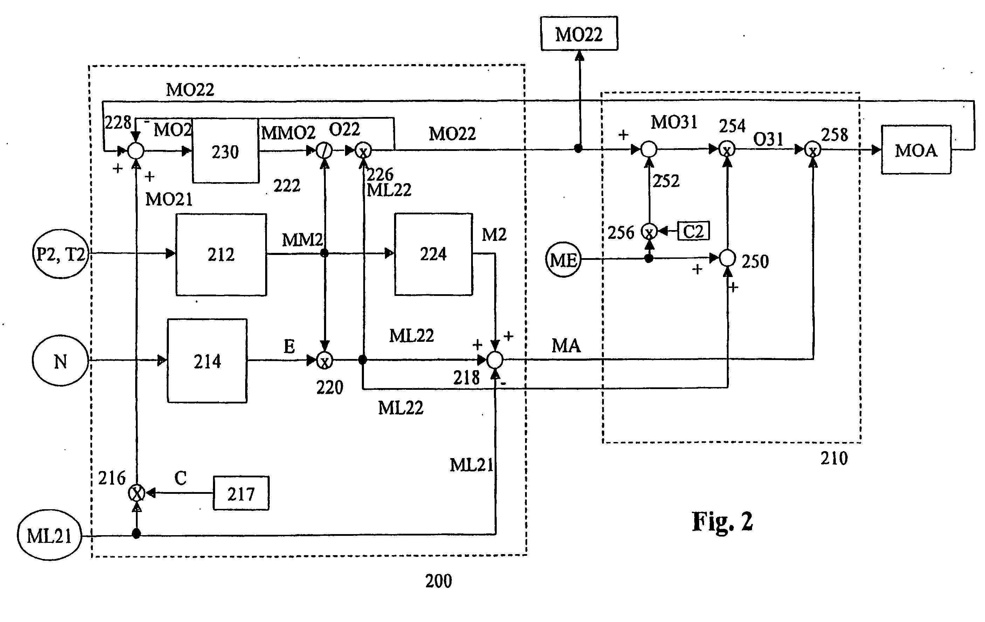

Die Erfindung wird nachstehend anhand der in der Zeichnung dargestellten Ausführungsformen erläutert. Es zeigen Figur 1 eine schematische Darstellung der Brennkraftmaschine samt Luftsystem und die Figur 2 ein Modell zur Bestimmung der Sauerstoffmenge, die in die Brennkraftmaschine strömt.

### Beschreibung der Ausführungsbeispiele

Im folgenden wird die erfindungsgemäße Vorgehensweise am Beispiel einer Dieselbrennkraftmaschine beschrieben. Die Erfindung ist aber nicht auf die Anwendung bei Dieselbrennkraftmaschinen beschränkt, sie kann auch bei anderen Brennkraftmaschinen, insbesondere bei direkteinspritzenden Benzinbrennkraftmaschinen verwendet werden.

Einer Brennkraftmaschine 100 wird über eine Hochdruckfrischluftleitung 102 eine bestimmte Luftmenge ML22, die einen bestimmten Sauerstoffanteil MO22 enthält, zugeführt. Die Größe MO22 wird auch als Sauerstoffanteil vor der Verbrennung bezeichnet. Die Luft in der Hochdruckfrischluftleitung 102 besitzt eine Temperatur T2 und einen Druck P2.

Über eine Niederdruckfrischluftleitung 108 gelangt die Umgebungsluft zu einem Verdichter 106 und strömt in die Hochdruckfrischluftleitung 102. Die Hochdruckfrischluftleitung 102 wird auch als Ansaugrohr bezeichnet. Über den Verdichter strömt die Luftmenge ML21 mit dem Sauerstoffanteil MO21 in die Hochdruckfrischluftleitung 102. Die Luftmenge ML21 mit dem Sauerstoffanteil MO21, die durch die Niederdruckfrischluftleitung 108 strömt, entspricht der Luftmenge mit dem entsprechenden Sauerstoffanteil, die durch den Verdichter 106 strömt. Die Luftmenge ML21, die von außen in das Ansaugrohr strömt, wird mittels eines Luftmengenmessers 105 gemessen.

Von der Brennkraftmaschine 100 strömt die Luftmenge ML31 mit dem Sauerstoffanteil MO31 in eine Hochdruckabgasleitung 110. Die Größe MO31 wird auch als Sauerstoffanteil nach der Verbrennung bezeichnet.

Die Abgase gelangen von der Hochdruckabgasleitung 110 über eine Turbine 112 in eine Niederdruckabgasleitung 114, die auch als Auspuffleitung 114 bezeichnet wird.

Die Turbine 112 treibt über eine Welle 111 den Verdichter 106 an. Mittels eines Ladersteller 113 kann der Wirkungsgrad der Turbine und damit des gesamten Laders beeinflußt werden.

Die Vorgehensweise kann auch bei Brennkraftmaschinen ohne Lader eingesetzt werden.

Zwischen der Hochdruckabgasleitung 110 und der Hochdruckfrischluftleitung 102 besteht eine Verbindung, die als Abgasrückführleitung 116 bezeichnet ist. Durch diese Abgasrückführleitung 116 strömt die Luftmenge MA, die den Sauerstoffanteil MOA beinhaltet. Der Querschnitt der Abgasrückführleitung 116 ist vorzugsweise mittels eines Abgasrückführventils 118 steuerbar.

Vorzugsweise wird die Drehzahl N an der Kurbel und/oder der Nockenwelle der Brennkraftmaschine mittels eines Drehzahlsensors 101 erfaßt. Desweiteren sind Mengenstellglieder 103 vorgesehen, die die einzuspritzende Kraftstoffmenge ME, die der Brennkraftmaschine zugeführt wird, bestimmen. Hierzu werden die Stellglieder 103 mit einem Mengensignal ME beaufschlagt.

Zur genauen Steuerung der Brennkraftmaschine bzw. der Stellglieder 118 und 113 sollten verschiedene der dargestellten Größen bekannt sein. Insbesondere sollte die Sauerstoffmenge bzw. der Sauerstoffanteil MO22, die der Brennkraftmaschine zugeführt wird, bekannt sein. Die Sauerstoffmenge bestimmt zusammen mit der eingespritzten Kraftstoffmenge ME die Abgasemissionen, insbesondere die Rußemissionen bei Dieselbrennkraftmaschinen.

Mit der erfindungsgemäßen Vorgehensweise werden vorzugsweise Luftmassen verarbeitet. Es können aber auch Volumengrößen verarbeitet werden. Im folgenden werden die Größen als Mengengrößen bezeichnet. Die beschriebenen Größen stellen nur eine besonders vorteilhafte Ausgestaltung dar. Anstelle der beschriebenen Größen können auch andere Größen, die den beschriebenen Größen entsprechen und/oder mit diesen über Umrechnungsfaktoren verbunden sind, verwendet werden.

In Figur 2 ist das Modell für das Ansaugrohr und die Verbrennung dargestellt. Das Modell für das Ansaugrohr ist mit 200 und das Modell für die Verbrennung ist mit 210 bezeichnet. Mittels verschiedener Sensoren, die mit Kreisen dargestellt sind, werden unterschiedliche leicht meßbare Größen erfaßt. Dies sind der Ladedruck P2, der den Druck in dem Ansaugrohr charakterisiert, die Ladelufttemperatur T2, die die Temperatur der Luft in dem Ansaugrohr 102 charakterisiert, die Drehzahl N der Brennkraftmaschine, die Frischluftmenge ML21, die von außen in das Ansaugrohr 102 einströmt, sowie die einzuspritzende Kraftstoffmenge ME. Bei der einzuspritzenden Kraftstoffmenge ME handelt es sich vorzugsweise um die einzuspritzende oder um die eingespritzte Kraftstoffmenge bzw. eine diese Kraftstoffmenge charakterisierende Größe, wie beispielsweise die Ansteuerdauer von Injektoren und/oder Einspritzventilen. Das Drehzahlsignal N liegt der Motorsteuerung bereits vor, da es zur Steuerung der Brennkraftmaschine verwendet wird.

Der Ladedruck P2 und die Ladelufttemperatur T2 gelangen zu einer Luftmengenbestimmung 212. Die Drehzahl gelangt zu einer Füllgradbestimmung 214 und die Luftmenge ML21 gelangt zum einen zu einem Verknüpfungspunkt 216 und mit negativem Vorzeichen zu einem Verknüpfungspunkt 218. Das Ausgangssignal MM2 der Luftmengenbestimmung 212, das der Luftmenge im Ansaugrohr entspricht, gelangt zum einen zu einem Verknüpfungspunkt 220, zu einem Verknüpfungspunkt 222 und zu einer Differenzierer 224.

Das Ausgangssignal M2 der Differenzierer 224 kennzeichnet die zeitliche Änderung der Luftmenge im Ansaugrohr. Dieses Signal M2 gelangt mit positivem Vorzeichen ebenfalls zu dem Additionspunkt 218.

Das Ausgangssignal E der Füllgradbestimmung 214 gelangt ebenfalls zu dem Verknüpfungspunkt 220. Das Ausgangssignal ML22 des Verknüpfungspunktes 220 kennzeichnet die Luftmenge, die in die Brennkraftmaschine strömt. Dieses Signal ML22 gelangt zum einen mit positivem Vorzeichen zum Eingang des Verknüpfungspunkts 218 und zum anderen zu einem Verknüpfungspunkt 226. Ferner gelangt dieses Signal ML22 bzgl. der Luftmenge, die in die Brennkraftmaschine strömt, zu einem Verknüpfungspunkt 250 des Verbrennungsmodells 210.

Am zweiten Eingang des Verknüpfungspunkts 216 liegt ein Ausgangssignal C einer Konstantenvorgabe. Mit dem Ausgangssignal MO21 des Verknüpfungspunkts 216, das der Sauerstoffmenge entspricht, die in das Ansaugrohr 102 einströmt, gelangt zu einem Verknüpfungspunkt 228. Am zweiten Eingang des Verknüpfungspunkts 228 liegt ein Signal MOA an, das der Sauerstoffmenge, die in der Abgasrückführleitung strömt, kennzeichnet. Dieses Signal MOA wird von dem Verbrennungsmodell 210 bereitgestellt. Das Ausgangssignal MO2 des Verknüpfungspunkts 228, das die Änderung der Sauerstoffmenge in dem Ansaugrohr 102 charakterisiert, gelangt zu einem Integrierer 230, an dessen Ausgang das Signal MMO2, das die Sauerstoffmenge in dem Ansaugrohr charakterisiert, anliegt.

Dieses Signal MMO2 bezüglich der Sauerstoffmenge in dem Ansaugrohr gelangt als zweite Größe zu dem Verknüpfungspunkt 222. Das Ausgangssignal O22 des Verknüpfungspunkts 222, das den Sauerstoffanteil in der Luft, die in die Brennkraftmaschine strömt, charakterisiert, gelangt zu dem Verknüpfungspunkt 226. Am Ausgang des Verknüpfungspunkts 226 liegt das Signal MO22 an, das die Sauerstoffmenge, die in die Brennkraftmaschine strömt, charakterisiert.

Dieses Signal MO22 gelangt mit negativen Vorzeichen zu dem Verknüpfungspunkt 228 und mit positivem Vorzeichen zu einem Verknüpfungspunkt 252 des Verbrennungsmodells 210. Das Ausgangssignal MO31 des Verknüpfungspunktes 252, das der Sauerstoffmenge, die aus der Brennkraftmaschine strömt, entspricht, gelangt zu einem Verknüpfungspunkt 254, an dessen zweiten Eingang das Ausgangssignal des Verknüpfungspunktes 250 liegt. Am zweiten Eingang des Verknüpfungspunktes 250 liegt das Kraftstoffmengensignal ME. Das Kraftstoffmengensignal ME gelangt ferner über einen Verknüpfungspunkt 256 mit negativem Vorzeichen zu dem Verknüpfungspunkt 252. Im Verknüpfungspunkt 256 wird das Signal mit einer Konstante C2 verknüpft. Das Ausgangssignal O31des Verknüpfungspunktes 254, das den Sauerstoffanteil in der Luft, die aus der Brennkraftmaschine strömt, entspricht, gelangt über einen Verknüpfungspunkt 258 zum Ausgang des Verbrennungsmodells 210. Am zweiten Eingang des Verknüpfungspunkts 256 liegt das Ausgangssignal MA, das die Luftmenge in der Abgasrückführleitung charakterisiert, des Verknüpfungspunkts 218 an.

Die gesamte im Ansaugrohr vorhandene Luftmenge MM2, berechnet die Luftmengenbestimmung 212 mittels der idealen Gasgleichung aus Ladedruck P2, der Ladelufttemperatur T2 und dem Volumen V dem Ansaugrohr. Das Volumen wird dabei als Konstante angesehen. Diese Luftmenge im Ansaugrohr MM2 wird über den Differenzierer 224, der vorzugsweise als DT1-Glied ausgebildet ist, differenziert. Somit ergibt die zeitliche Änderung der Luftmenge M2 in dem Ansaugrohr.

Die Luftmenge ML22, die in die Brennkraftmaschine strömt, ist proportional zur Dichte des Gases in dem Ansaugrohr und damit proportional zur Luftmenge MM2. Der Proportionalitätsfaktor E wird als Kennlinie abhängig von der aktuellen Motordrehzahl N von der Füllgradbestimmung 214 vorgegeben.

Aus der mit Hilfe des Luftmengenmessers 105 gemessenen Luftmenge ML21, der geschätzten Luftmengen ML22, die in die Brennkraftmaschine strömt und der Änderung der Luftmenge M2 in dem Ansaugrohr berechnet der Verknüpfungspunkt 218 einen Schätzwert für die Luftmenge MA, die durch die Abgasrückführleitung strömt. Dies bedeutet, die Luftmenge im Ansaugrohr wird bilanziert.

Zusätzlich zur gesamten Luftmenge MM2 in dem Ansaugrohr wird auch die darin enthaltene Sauerstoffmenge MMO2 geschätzt. Hierfür wird der Sauerstoffmengenstrom MO2 integriert. Der Sauerstoffmengenstrom setzt sich aus drei Komponenten zusammen.

Die erste Komponente ist die, über den Luftmengenmesser 105 zufließende Sauerstoffmenge MO21, diese ist proportional zur Luftmenge ML21 die über den Luftmengenmesser strömt. Die Proportionalitätskonstante C entspricht dem Sauerstoffgehalt der Frischluft. Die zweite Komponente der gesuchten Sauerstoffmenge MO22, die in die Brennkraftmaschine strömt, ist proportional zur Luftmenge ML22, die in die Brennkraftmaschine strömt. Die Proportionalitätskonstante O22 entspricht dem Sauerstoffanteil der Luft, die in die Brennkraftmaschine strömt. Die Größe O22 ergibt sich als Quotient der Sauerstoffmenge MMO2 und der Luftmenge MM2. Da der Sauerstoffmengenstrom in die Brennkraftmaschine dem Ansaugrohr Sauerstoff entnimmt, wird dieser Anteil mit einem negativen Vorzeichen berücksichtigt. Die dritte Komponente ist die Sauerstoffmenge MOA, die über das Agasrückführventil in das Ansaugrohr gelangt. Dieser Sauerstoffmengenstrom ist proportional zur Luftmenge MA, die durch die Abgasrückführleitung strömt. Die Proportionalitätskonstante ist der Sauerstoffanteil O31, in der Luft, die aus der Brennkraftmaschine strömt.

Um diesen Sauerstoffanteil O31, in der Luft, die aus der Brennkraftmaschine strömt, zu bestimmen, wird das Verbrennungsmodell verwendet. Dieses geht davon aus, daß die gesamte eingespritzte Kraftstoffmenge verbrennt, und dabei dem Gasgemisch im Brennraum Sauerstoff entzieht, wodurch die Sauerstoffmenge MO22 vor Verbrennung auf die Sauerstoffmenge MO31 nach Verbrennung reduziert wird. Kraftstoffmenge und Reduktion der Sauerstoffmenge sind über das stöchiometrische Verhältnis C2 zueinander proportional.

Der Sauerstoffanteil O31 nach Verbrennung ergibt sich als Quotient des Sauerstoffmenge MO31 und der gesamten Luftmenge die aus der Brennkraftmaschine strömt. Die Luftmenge, die aus der Brennkraftmaschine strömt, ergibt sich als Summe aus der Luftmenge ML22, die in die Brennkraftmaschine strömt, und der eingespritzten Kraftstoffmenge ME.

Mittels der dargestellten Vorgehensweise wird aus einfach zu messenden Größen die Sauerstoffmenge MO22, die in die Brennkraftmaschine strömt, bestimmt, wobei die Auswirkungen der Abgasrückführung und der Sauerstoffanteil im Abgas berücksichtigt werden. Dieser kann bei mager betriebenen Brennkraftmaschinen, insbesondere beim Dieselmotor, erheblich sein.

Erfindungsgemäß wird ausgehend von wenigstens einer Temperaturgröße T2, einer Druckgröße P2, einer Drehzahl N, einer Kraftstoffmenge ME und einer Luftmenge ML21 die Sauerstoffmenge MO22, die in die Brennkraftmaschine strömt, bestimmt. Die Temperaturgröße T2, charakterisiert die Temperatur der Luft in dem Ansaugrohr. Die Druckgröße P2 charakterisiert den Druck der Luft in dem Ansaugrohr.

Die Luftmenge MA, die durch eine Abgasrückführleitung strömt, wird durch Bilanzieren der Luftmenge in dem Ansaugrohr ermittelt. Die Sauerstoffmenge MM02 in dem Ansaugrohr wird ausgehend von wenigstens der Sauerstoffmenge MO21, die von außen in das Ansaugrohr strömt, der Sauerstoffmenge MO22, die in die Brennkraftmaschine strömt, und einer Sauerstoffmenge MOA, die über die Abgasrückführleitung strömt, bestimmt. Dabei werden die Sauerstoffmengen jeweils aus der entsprechenden Luftmenge und dem jeweiligen Sauerstoffanteil bestimmt.

Bei den Sauerstoffanteilen der Luftmengen, die von außen in das Ansaugrohr strömt, handelt es sich um die Konstante C. Der Sauerstoffanteil O31 der Luftmenge, die über die Abgasrückführleitung strömt, wird mittels eines Verbrennungsmodells bestimmt. Der Sauerstoffanteil O22 der Luftmenge, die in die Brennkraftmaschine strömt, berechnet sich aus der Sauerstoffmenge MMO2 in dem Ansaugrohr und der Luftmenge in dem Ansaugrohr.

Die Sauerstoffmenge MO22, die in die Brennkraftmaschine strömt, wird ausgehend von wenigstens der Sauerstoffmenge MMO2 in dem Ansaugrohr, der Luftmenge MM2 in dem Ansaugrohr und der Luftmenge ML22, die in die Brennkraftmaschine strömt, bestimmt. Die Luftmenge ML22, die in die Brennkraftmaschine strömt, wird ausgehend von wenigstens der Luftmenge MM2 in dem Ansaugrohr und der Drehzahl N bestimmt.

Die Luftmenge MM2 in dem Ansaugrohr wird ausgehend von wenigstens der Temperaturgröße T2 und der Druckgröße P2 bestimmt.

## Patentansprüche

1. Verfahren zur Steuerung einer Brennkraftmaschine, bei dem mittels wenigstens eines Modells eine Sauerstoffmenge (MO22), die in die Brennkraftmaschine strömt, ausgehend von wenigstens einer Stellgröße und wenigstens einer Messgröße, die den Zustand der Luft in einem Ansaugrohr charakterisiert, bestimmt wird, wobei ausgehend von wenigstens einer Temperaturgröße (T2), einer Druckgröße (P2), einer Drehzahlgröße (N), einer Kraftstoffmengengröße (ME) und einer Luftgröße (ML21), die die von außen in das Ansaugrohr strömende Luftmenge charakterisiert, die Sauerstoffmenge (MO22) bestimmt wird, wobei eine Luftmenge (MA), die durch eine Abgasrückführleitung strömt, durch Bilanzieren der Luftmenge in dem Ansaugrohr ermittelt wird.

2. Verfahren nach Anspruch 1, **dadurch gekennzeichnet, dass** die Temperaturgröße (T2), die die Temperatur der Luft im Ansaugrohr charakterisiert, die Druckgröße (P2), die den Druck der Luft in dem Ansaugrohr charakterisiert, und die Luftgröße (ML21), die die von außen in das Ansaugrohr strömende Luftmenge charakterisiert, mittels Sensoren erfasst werden.

3. Verfahren nach einem der vorherigen Ansprüche, **dadurch gekennzeichnet, dass** eine Sauerstoffmenge (MMO2) in dem Ansaugrohr ausgehend von wenigstens einer Sauerstoffmenge (MO21), die von außen in das Ansaugrohr strömt, der Sauerstoffmenge (MO22), die in die Brennkraftmaschine strömt, und einer Sauerstoffmenge (MOA), die über die Abgasrückführleitung strömt, bestimmt wird.

4. Verfahren nach Anspruch 3, **dadurch gekennzeichnet, dass** die Sauerstoffmengen jeweils aus der entsprechenden Luftmenge und dem jeweiligen Sauerstoffanteil bestimmt werden.

5. Verfahren nach Anspruch 3 oder 4, **dadurch gekennzeichnet, dass** ein Sauerstoffanteil (O31) der Luftmenge, die über die Abgasrückführleitung strömt, mittels eines Verbrennungsmodells bestimmt wird.

6. Verfahren nach einem der vorherigen Ansprüche, **dadurch gekennzeichnet, dass** die Sauerstoffmenge (MO22), die in die Brennkraftmaschine strömt, ausgehend von wenigstens der Sauerstoffmenge (MMO2) in dem Ansaugrohr, einer Luftmenge (MM2) in dem Ansaugrohr und einer Luftmenge (ML22), die in die Brennkraftmaschine strömt, bestimmt wird.

7. Verfahren nach Anspruch 6, **dadurch gekennzeichnet, dass** die Luftmenge (ML22), die in die Brennkraftmaschine strömt, ausgehend von wenigstens der Luftmenge (MM2) in dem Ansaugrohr und der Drehzahl (N) bestimmt wird.

8. Verfahren nach Anspruch 6 oder 7, **dadurch gekennzeichnet, dass** die Luftmenge (MM2) in dem Ansaugrohr ausgehend von wenigstens der Temperaturgröße (T2) und der Druckgröße (P2) bestimmt wird.

9. Vorrichtung zur Steuerung einer Brennkraftmaschine, die mittels wenigstens eines Modells eine Sauerstoffmenge (MO22), die in die Brennkraftmaschine strömt, ausgehend von wenigstens einer Stellgröße und wenigstens einer Messgröße, die den Zustand der Luft in einem Ansaugrohr charakterisiert, bestimmt, wobei Mittel vorgesehen sind, die ausgehend von wenigstens einer Temperaturgröße (T2), einer Druckgröße (P2), einer Drehzahlgröße (N), einer Kraftstoffmengengröße (ME) und einer Luftgröße (ML21), die die von außen in des Ansaugrohr strömende Luftmenge charakterisiert die Sauerstoffmenge (MO22) bestimmen und die eine Luftmenge (MA), die durch eine Abgasrückführleitung strömt, durch Bilanzieren der Luftmenge in dem Ansaugrohr ermitteln.

## Claims

1. Method for controlling an internal combustion engine, in which an oxygen quantity (MO22) which flows into the internal combustion engine is determined by means of at least one model on the basis of at least one manipulated variable and at least one measured variable which characterizes the state of the air in an intake manifold, wherein the oxygen quantity (MO22) is determined on the basis of at least one temperature variable (T2), one pressure variable (P2), one rotational speed variable (N), one fuel quantity variable (ME) and one air variable (ML21) which characterizes the air quantity flowing into the intake manifold from the outside, wherein an air quantity (MA) which flows through an exhaust gas recirculation line is determined by balancing the air quantity in the intake manifold.

2. Method according to Claim 1, **characterized in that** the temperature variable (T2) which characterizes the temperature of the air in the intake manifold, the pressure variable (P2) which characterizes the pressure of the air in the intake manifold, and the air variable (ML21) which characterizes the air quantity flowing into the intake manifold from the outside, are sensed by means of sensors.

3. Method according to one of the preceding claims, **characterized in that** an oxygen quantity (MMO2) in the intake manifold is determined on the basis of at least one oxygen quantity (MO21) which flows into the intake manifold from the outside, the oxygen quantity (MO22) which flows into the internal combustion engine, and an oxygen quantity (MOA) which flows via the exhaust gas recirculation line.

4. Method according to Claim 3, **characterized in that** the oxygen quantities are each determined from the corresponding air quantity and the respective oxygen content.

5. Method according to Claim 3 or 4, **characterized in that** an oxygen content (O31) of the air quantity which flows via the exhaust gas recirculation line is determined by means of a combustion model.

6. Method according to one of the preceding claims, **characterized in that** the oxygen quantity (MO22) which flows into the internal combustion engine is determined on the basis of at least the oxygen quantity (MMO2) in the intake manifold, an air quantity (MM2) in the intake manifold, and an air quantity (ML22) which flows into the internal combustion engine.

7. Method according to Claim 6, **characterized in that** the air quantity (ML22) which flows into the internal combustion engine is determined on the basis of at least the air quantity (MM2) in the intake manifold and the rotational speed (N).

8. Method according to Claim 6 or 7, **characterized in that** the air quantity (MM2) in the intake manifold is determined on the basis of at least the temperature variable (T2) and the pressure variable (P2).

9. Device for controlling an internal combustion engine which determines an oxygen quantity (MO22) which flows into the internal combustion engine by means of at least one model on the basis of at least one manipulated variable and at least one measured variable which characterizes the state of the air in an intake manifold, wherein means are provided which determine the oxygen quantity (MO22) on the basis of at least one temperature variable (T2), one pressure variable (P2), one rotational speed variable (N), one fuel quantity variable (ME) and one air variable (ML21) which characterizes the air quantity flowing into the intake manifold from the outside, and which determine an air quantity (MA) which flows through an exhaust gas recirculation line by balancing the air quantity in the intake manifold.

## Revendications

1. Procédé de commande d'un moteur à combustion interne selon lequel, à l'aide d'au moins un modèle on détermine une quantité d'oxygène (MO22) alimentant le moteur à combustion interne à partir d'au moins une grandeur de réglage et d'au moins une grandeur de mesure caractérisant l'état de l'air dans la conduite d'admission, selon lequel,
partant d'au moins une grandeur de température (T2), d'une grandeur de pression (P2), d'une grandeur de vitesse de rotation (N), d'une grandeur de dose de carburant (ME) et d'une grandeur d'air (ML21) qui **caractérise** la quantité d'air arrivant de l'extérieur dans la conduite d'admission, on définit la quantité d'oxygène (MO22),
et on détermine une quantité d'air (MA) qui traverse une conduite de réintroduction des gaz d'échappement en faisant le bilan des quantités d'air dans la conduite d'admission.

2. Procédé selon la revendication 1,
**caractérisé en ce que**
l'on saisit à l'aide de capteurs la grandeur de température (T2) caractérisant la température de l'air dans la conduite d'admission, la grandeur de pression (P2) caractérisant la pression de l'air dans la conduite d'admission et la grandeur de l'air (ML21) qui **caractérise** la quantité d'air arrivant de l'extérieur dans la conduite d'admission.

3. Procédé selon l'une quelconque des revendications précédentes,
**caractérisé en ce qu'**
on détermine une quantité d'oxygène (MMO2) dans la conduite d'admission à partir d'au moins une quantité d'oxygène (MO21) arrivant de l'extérieur dans la conduite d'admission, de la quantité d'oxygène (MO22) qui arrive dans le moteur à combustion interne et d'une quantité d'oxygène (MOA) qui passe par la conduite de réintroduction des gaz d'échappement.

4. Procédé selon la revendication 3,
**caractérisé en ce qu'**
on détermine les quantités d'oxygène chaque fois à partir des quantités d'air correspondantes et de la teneur respective en oxygène.

5. Procédé selon l'une quelconque des revendications 3 ou 4,
**caractérisé en ce qu'**
on détermine une teneur en oxygène (O31) de la quantité d'air passant par la conduite de réintroduction des gaz d'échappement à l'aide d'un modèle de combustion.

6. Procédé selon l'une quelconque des revendications précédentes,
**caractérisé en ce qu'**
on détermine la quantité d'oxygène (MO22) qui arrive dans le moteur à combustion interne à partir au moins de la quantité d'oxygène (MMO2) de la conduite d'admission, de la quantité d'air (MM2) dans la conduite d'admission et d'une quantité d'air (ML22) arrivant dans le moteur à combustion interne.

7. Procédé selon la revendication 6,
**caractérisé en ce qu'**
on détermine la quantité d'air (ML22) qui arrive dans le moteur à combustion interne à partir au moins de la quantité d'air (MM2) dans la conduite d'admission et la vitesse de rotation (N).

8. Procédé selon l'une quelconque des revendications 6 ou 7,
**caractérisé en ce que**
partant d'au moins une grandeur de température (T2) et d'une grandeur de pression (P2) on détermine la quantité d'air (MM2) dans la conduite d'admission.

9. Dispositif de commande d'un moteur à combustion interne qui détermine à l'aide d'au moins un modèle, une quantité d'oxygène (MO22) arrivant dans le moteur à combustion interne à partir d'au moins une grandeur de réglage et d'au moins une grandeur de mesure caractérisant l'état de l'air dans la conduite d'admission, dispositif comprenant des moyens qui, partant d'au moins une grandeur de température (T2), une grandeur de pression (P2), une grandeur de vitesse de rotation (N), d'une grandeur de dose de carburant (ME) et d'une grandeur d'air (ML21) caractérisant la quantité d'air arrivant de l'extérieur dans la conduite d'admission, définissant la quantité d'oxygène (MO22) et déterminant une quantité d'air (MA) passant par la conduite de réintroduction des gaz d'échappement par équilibrage de la quantité d'air dans la conduite d'admission.
